(19) **Europäisches Patentamt / European Patent Office / Office européen des brevets**

(11) **EP 4 450 941 A1**

(12) **EUROPEAN PATENT APPLICATION**

(43) Date of publication:
**23.10.2024 Bulletin 2024/43**

(21) Application number: **23168965.4**

(22) Date of filing: **20.04.2023**

(51) International Patent Classification (IPC):
**G01M 3/24** (2006.01)    **G01M 3/28** (2006.01)
**G06Q 50/06** (2024.01)    **E03B 7/00** (2006.01)
**F17D 5/06** (2006.01)

(52) Cooperative Patent Classification (CPC):
**G01M 3/243; E03B 7/003; G01M 3/2815;
G06Q 50/06;** F17D 5/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
- **Arbuzov, Alexey
  196084 Sankt-Peterburg (RU)**
- **Mokhov, Ilya
  192281 St. Petersburg (RU)**
- **Sazykin, Dmitry
  195279 Saint Petersburg (RU)**
- **Veniaminov, Nicolay
  196135 St. Petersburg (RU)**

(74) Representative: **Siemens Patent Attorneys
Postfach 22 16 34
80506 München (DE)**

(54) **SYSTEM AND METHOD FOR DETECTING AND LOCATING A LEAK IN A PIPELINE**

(57)    The present invention concerns a system and a method for detecting and locating a leak (11) in a fluid containing structure (10), the method comprising:
- operating (201) NPW sensors of a set S1 of n NPW sensors $p\_1,...,p\_n$, with $n \geq 2$, wherein each NPW sensor $p\_i$, with $i = 1,...,n$, is configured for being installed at a position $P\_i$ with respect to the fluid containing structure (10), wherein, during operation, each NPW sensor $p\_i$ is configured for measuring, at said position $P\_i$, the pressure of the fluid contained in said fluid containing structure (10) and for outputting measured pressure values in function of the time;
- receiving (202), by a leak monitoring system - hereafter "LMS" - (101), said measured pressure values, wherein the LMS (101) is configured for detecting and locating a leak (11) in the fluid containing structure (10) ;
the method being further characterized in that it comprises:
- using (203) acoustic signals measured by one or several ALD sensors connected to the LMS (101) for improving a detection and/or a location of the leak (11) by said LMS (101).

FIG 1

**Description**

The present invention relates to pipeline leak detection and location.

More generally speaking, the invention concerns the detection and location of a leak in a fluid containing structure, e.g. a pipeline network, typically used for fluid distribution and/or transmission. Said fluid might be water, or oil, or gas, or a heating fluid, or any other fluid that needs to be transmitted and/or distributed by means of said structure from one or several source points A to one or several distribution points B. Challenges with respect to leaks in fluid containing structures are mainly related to the detection of the leak and the identification of each leak location.

Different solutions have been proposed for detecting and locating a leak in a fluid containing structure. In particular, two approaches are commonly used. They are the negative pressure wave (hereafter "NPW") approach and the acoustic leak detection (hereafter "ALD") approach. The NPW approach is known as the method allowing to capture the transient wave generated during a burst event (e.g. a pressure wave resulting from a sudden change in a direction of motion of the fluid inside the fluid containing structure, wherein said change can result in a hydraulic shock, also called water hammer, that can be observed, for instance at the extremities of a pipe) using high-rate pressure sensors, while the ALD approach is based on the fact that the fluid that is "leaking" from the inside of the fluid containing structure to the outside of said fluid containing structure generates a sound which propagates along the fluid containing structure, and that can be captured by sensors, typically acoustic noise loggers or microphones.

However, each of said approaches has known limitations. In particular, for the ALD, the separation distance between acoustic noise loggers is typically 50-150m due to the strong attenuation of acoustic signals. This means that a large number of acoustic noise loggers is required. Additionally, the sampling frequency of acoustic signals recorded by the acoustic noise loggers needs to be high, which, in the absence of permanent power supply, means that said acoustic noise loggers cannot operate continuously in order to spare energy. Actually, most known in the art acoustic noise loggers work only according to an on-schedule operation mode, wherein the acoustic noise logger is in a sleep or power saving mode almost all the time, except for short period of time at night (presumably quiet time). In such a case, the acoustic noise logger is configured for recording short sound samples during awake periods, deriving a leak from an analysis of the recorded sound samples, wherein only recorded sounds similar to a leak sound are sent to a server for said analysis. According to the ALD technique, continuous monitoring is practically impossible which means that ensuring an early detection of a leak is also not possible.

In the case of the NPW technique, high-rate pressure sensors are typically separated by 1-2km from each other. The NPW technique further requires a lower sampling frequency compared to the ALD technique which means also a lower power consumption. Actually, the high-rate pressure sensors need to be constantly in an awake mode: indeed, a continuous monitoring by the pressure sensors is required in order not to miss any observation by a pressure sensor of a wave front resulting from a leak, wherein the time at which said observation occurred is required to precisely evaluate the lag in wave arrival times at neighboring pressure sensors. Finally, since the wave propagating along the fluid containing structure interacts with said structure itself, surrounding medium, and other parasite waves, an accurate localization of the leak is usually difficult.

An objective of the present invention is to propose a system and a method that overcome the limitations of the NPW and ADL techniques, while enabling to precisely detect and locate a leak in a fluid containing structure.

This objective is achieved by the measures taken in accordance with the independent claims. Further advantageous embodiments are proposed by the dependent claims.

The general concept of the present invention is to propose a solution that combines NPW sensors and ALD sensors for leakage detection in a fluid containing structure.

More precisely, according to an aspect of the invention, a system for detecting and locating a leak in a fluid containing structure is proposed, wherein said system comprises:

- a set S1 of n pressure transducers or pressure sensors (simply referred to hereafter as "NPW sensors") $p\_1,...,p\_n$, with $n \geq 2$, i.e. the set S1 comprises at least two NPW sensors, each NPW sensor $p\_i$, with $i = 1,...,n$, being configured for being installed at a position $P\_i$ with respect to the fluid containing structure. In particular, the installation position of each NPW sensor is different from each other, i.e. $\forall j \in \{1,...,n\}$, $P\_i \neq P\_j$ if $i \neq j$. Each NPW sensor $p\_i$ is configured for measuring, at said position $P\_i$, the pressure of the fluid contained in said fluid containing structure and for outputting measured pressure values in function of the time, wherein each of the n NPW sensors is preferentially configured for operating continuously;

- a leak monitoring system (hereafter "LMS") configured for acquiring or receiving said measured pressure values, the LMS being configured for detecting and locating a leak in the fluid containing structure. Typically, the LMS is configured for being connected to the n NPW sensors. In particular, the LMS is notably configured for detecting a leak, preferentially in real time, from temporal pressure data (i.e. said measured pressure values in function of the time) received from one or several NPW sensors, preferentially from at least two NPW sensors. In particular, the leak is detected from temporal pressure data of at least one NPW sensor by detecting notably an amplitude change in said temporal pressure data. In particular, the leak is located from temporal pressure data of a least two NPW sensors, notably by inferring the leak position from a time difference between the time needed for a negative pressure wave resulting from the leak to propagate, from said leak position, upward towards one of said two NPW sensors, and the time needed to propagate from said leak position downward towards the other of said two NPW sensors;

the system according to the invention being characterized in that:

- it comprises one or several acoustic sensors (simply referred to hereafter as "ALD sensors") connected to the LMS and used by the latter for improving the detection and/or location of the leak from acoustic signals captured by one or several of said ALD sensors. For instance, the system according to the invention may comprise, between at least one, for instance between some or each, couple of directly neighboring NPW sensors $p\_k$ and $p\_t$, $k,t \in \{1,...,n\}$ and $k \neq t$ (directly neighboring meaning that there is a continuous portion or section of said fluid containing structure that connects (or goes from) $P\_k$ and $P\_t$, and that between $p\_k$ and $p\_t$, there is no other NPW sensor installed), , a set $S2^{k,t}$ of $m^{k,t}$ ALD sensors $a_1^{k,t}, ..., a_{m^{k,t}}^{k,t}$, with $m^{k,t} \geq 1$, preferentially, $m^{k,t} \geq 2$, wherein each ALD sensor $a_v^{k,t}$, with $v = 1,..., m^{k,t}$, is configured for being installed at a position $A_v^{k,t}$ with respect to the fluid containing structure ($A_v^{k,t}$ being thus located between $P\_k$ and $P\_t$), wherein the installation location $A_v^{k,t}$ of each ALD sensor $a_v^{k,t}$ is preferentially different from each other, i.e. $\forall w \in \{1, ..., m^{k,t}\}$, then $A_v^{k,t} \neq A_w^{k,t}$ if $v \neq w$. Each ALD sensor $a_v^{k,t}$ is capable of capturing or acquiring or recording an acoustic signal (e.g. a sound sample) at its installation position $A_v^{k,t}$. Each of the ALD sensors $a_v^{k,t}$, is connected to the LMS for making it possible to improve said detection and/or location of the leak. Of course, $m^{k,t} = m^{t,k}$ since they both are the number of ALD sensors between the NPW sensors $p\_k$ and p_t. The same reasoning applies mutatis mutandis to $a_v^{k,t}$ and $A_v^{k,t}$, wherein $a_v^{k,t} = a_v^{t,k}$ is the ALD sensor "$a\_v$" located between $p\_k$ and $p\_t$ at the position $A_v^{k,t} = A_v^{t,k}$.

According to another aspect of the present invention, a method for detecting and locating a leak in a fluid containing structure is proposed, wherein said method comprises the following steps:

- operating NPW sensors of a set S1 of n NPW sensors $p\_1$ , ..., $p\_n$, wherein each NPW sensor $p\_i$ is configured for being installed at a position $P\_i$ which is in particular different from the installation position $P\_k$ of another NPW sensor of said set S1, wherein, during operation, each NPW sensor $p\_i$ is configured for measuring, at said position $P\_i$, the pressure of the fluid contained in said fluid containing structure and for outputting measured pressure values in function of the time;
- acquiring or receiving, by a LMS, said measured pressure values, wherein the LMS is configured for detecting and locating a leak in the fluid containing structure. In particular, the method comprises a detection, by the LMS and from the measured pressure values received from one or several NPW sensors (e.g. at least two), a leak in the fluid containing structure;

the method being characterized in that it comprises:

- using acoustic signals measured by one or several ALD sensors connected to the LMS for improving a detection and/or a location of the leak by said LMS. As explained above with respect to the system according to the invention, the method may comprise acquiring or capturing or recording an acoustic signal by one or several ALD sensors installed between two neighboring NPW sensors in order to improve said detection and/or location of the leak that is performed by the LMS from the measured pressure values.

According to the present invention, and preferentially, each of the ALD sensors is configured for operating on demand, upon reception of an activation signal sent by the LMS in case of a detection, by the latter, of a leak from said measured pressure values. In particular, the reception of the activation signal by an ALD sensor is configured for triggering an automatic activation of the latter, which automatically switches from a nominal sleeping mode (i.e. a standby or nonactivated mode) to an activated mode (i.e. an awake mode), wherein the ALD sensor is configured for recording or capturing or acquiring a sound sample in said activated mode and for sending the recorded (or acquired or captured) sound sample to the LMS in response to the reception of said activation signal.

According to the present invention, the LMS is preferentially configured for sending said activation signal to a subset of ALD sensors upon detection, from said temporal pressure data, of a leak in the fluid containing structure. In other words, the sending of the activation signal to said subset of ALD sensors is triggered by the detection, by the LMS, of a leak from the temporal pressure data.

Preferably, if a leak location has been determined by the LMS from said temporal pressure data that lead to the detection of the leak, then said activation signal is sent by the LMS to a subset of ALD sensors comprised within a predefined distance from said leak location. In particular, if no leak location has been determined by the LMS from said temporal pressure data, then the LMS is configured for sending said activation signal to a predefined subset of ALD sensors, i.e. to a subset of ALD sensors that has been predefined in function of the position, with respect to the fluid containing structure, of the two NPW sensors having temporally first detected or measured or observed a negative wave pressure corresponding to, or resulting from, said leak. In other words, for each pair of directly neighboring NPW sensors, a subset of ALD sensors is predefined for being activated in case said directly neighboring NPW sensors are the ones that first detect/measure/observe said negative wave pressure. Typically, if the fluid containing structure is a pipeline network, then said predefined subset of ALD sensors represents for instance a subsection of a pipeline of said pipeline network.

Further aspects of the present invention will be better understood through the following drawings, wherein like numbers designate like objects:

Figure 1   schematic illustration of a system according to the invention;

Figure 2   flowchart of a preferred embodiment of a method according to the invention.

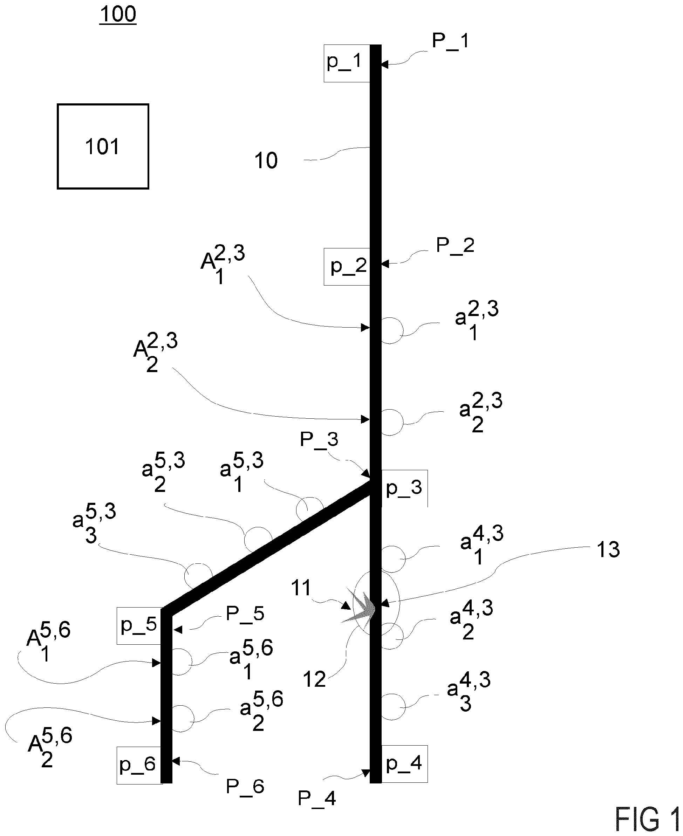

A preferred embodiment of the system 100 according to the invention is illustrated by Figure 1. The problem that said system 100 proposes to solve is a problem of detection and location of a leak 11 in a fluid containing structure 10, e.g. a pipeline network. Said leak generates a flow of the fluid contained within the fluid containing structure from the inside of said structure to the outside of the latter.

Depending on the kind of fluid, the lost quantity, the surrounding environment, etc., this might lead to severe damages to the surrounding environment. Therefore, to prevent bad consequences resulting from a leak, an early detection is crucial.

The fluid containing structure 10 might be a fluid transmission and distribution network made of a plurality of interconnected pipes or ducts or the like, which may form or comprise one or several interconnection nodes, so that the created network be appropriate for the transmission of said fluid from one or several sources or points towards one or several other points, where said fluid can typically be distributed. Such fluid containing structures, like water and distribution network, oil or gas distribution networks, are well-known to the skilled persons and are not the subject of the present invention.

Indeed, the present invention concentrates on the detection and location of leaks 11 within such fluid containing structures 10. For this purpose, the system 100 comprises a set S1 of n=6 NPW sensors p_1 , ... , p_n=6, each located at a different respective position P_1 , ... , P_n=6 on the fluid containing structure 10. Preferentially, the NPW sensors are installed along the length of the fluid containing structure, the distance separating two directly neighboring NPW sensors being typically 1-2 km. The present invention further proposes to install, between some or each pair of directly neighboring NPW sensors, a set of ALD sensors, e.g. acoustic loggers. The ALD sensors are notably installed along the length of the fluid containing structure, with distance separating two directly neighboring ALD sensors being typically 50-200m, so that several ALD sensors can usually be installed between two directly neighboring NPW sensors.

According to the exemplary embodiment of Figure 1, no ALD sensors have been installed between the directly neighboring NPW sensors p_1 and p_2. However, between the couple of directly neighboring NPW sensors p_2 and p_3, two ALD sensors $a_1^{2,3}$ and $a_2^{2,3}$ have been respectively installed at the positions $A_1^{2,3}$ and $A_2^{2,3}$. Said two ALD sensors are part of the set $S2^{2,3} = \{ a_1^{2,3}, a_2^{2,3} \}$. The same applies to the couples of directly neighboring NPW sensors p_4 and p_3, p_5 and p_3, and p_5 and p_6, wherein between each of said directly neighboring NPW sensors, one or several ALD sensors have been installed, the number of installed ALD sensors depending notably on the distance separating the considered directly neighboring NPW sensors. In particular, three ALD sensors $a_1^{4,3}$, $a_2^{4,3}$, and $a_3^{4,3}$ have been respectively installed at the positions $A_1^{4,3}$, $A_2^{4,3}$, and $A_3^{4,3}$ between the directly neighboring NPW sensors p_4 and p_3. Said three ALD sensors are part of the set $S2^{4,3} = \{ a_1^{4,3}, a_2^{4,3}, a_3^{4,3} \}$. Also, three ALD sensors $a_1^{5,3}$, $a_2^{5,3}$, and $a_3^{5,3}$ have been respectively installed at the positions $A_1^{5,3}$, $A_2^{5,3}$, and $A_3^{5,3}$ (not shown) located between P_5 and P_3. Said three ALD sensors are part of the set

$$S2^{5,3} = \{a_1^{5,3}, a_2^{5,3}, a_3^{5,3}\}$$

. And finally, two ALD sensors $a_1^{5,6}$ and $a_2^{5,6}$ have been respectively installed at the positions $A_1^{5,6}$ and $A_2^{5,6}$ located between P_5 and P_6 on the fluid containing structure. Said two ALD sensors are part of the set

$$S2^{5,6} = \{a_1^{5,6}, a_2^{5,6}\}$$

.

Of course, the fluid containing structure shown in Fig. 1 is a schematic example, that is, in the reality, fluid containing structures might be more or less complex. For instance, a single long pipe could also be considered. Preferentially, the system 100 according to the invention comprises at least two couples of directly neighboring NPW sensors, wherein, for each of said two couples, a set of ALD sensors is installed between the directly neighboring NPW sensors of the considered couple.

According to the present invention, the ALD sensors and the NPW sensors are connected to a LMS 101. Each connection of the LMS with one of said sensors can be a wire or wireless connection. In particular, the LMS, the ALD sensors, and NPW sensors may comprise communication modules for enabling to send and/or receive, for instance to exchange, data and/or signals. Indeed, the LMS is in charge of the monitoring of leaks that may occur within the fluid containing structure, and for this purpose, it is configured for receiving data from the NPW and ALD sensors, and for detecting and locating leaks from the received data.

The NPW sensors are preferentially configured for continuously measuring fluid pressure at their respective position and for providing the measured pressure value and a temporal data being the time at which the measured pressure value was actually measured to the LMS 101. Said measured pressure value together with its corresponding temporal data forming the so-called temporal pressure data.

The ALD sensors according to the invention are preferentially configured for operating discontinuously. In particular, they are preferentially configured for operating on-demand, upon reception of an activation signal sent by the LMS 101, for instance to a set of ALD sensors, e.g. to one or several ALD sensors. The reception, by an ALD sensor, of said activation signal automatically triggers a recording or acquisition or a capture of a sound sample, i.e. a recording or acquisition or capture of an acoustic signal in function of the time, wherein said capture, acquisition, or recording takes place for a given or predefined period of time. Said given or predefined period of time might be a parameter provided by the LMS to the ALD sensor via said activation signal, or might be a parameter stored and predefined within the ALD sensor.

According to the present invention, the ALD sensor having received the activation signal is configured for automatically sending to the LMS 101 the recorded or acquired or captured sound sample. Preferentially, after said sending of the recorded or acquired or captured sound sample to the LMS, the ALD sensor automatically switches from its activated mode to its nominal sleeping mode. Alternatively, the ALD sensor may switch from its activated mode to its sleeping mode upon reception of a deactivation signal from the LMS, wherein said deactivation signal is preferentially automatically sent to an ALD sensor directly after reception of the sound sample acquired by the latter. As known in the art, the sound wave which propagates in the fluid is preferentially converted into an electric signal in function of the time by the ALD sensor (which is typically a transducer). The so-called sound sample or acoustic signal sent by the ALD sensor to the LMS in response to the reception of the activation signal is then preferentially said electric signal in function of the time.

Preferentially, the ALD sensors, the NPW sensors, and the LMS are configured for operating and communicating in real time. In particular, or optionally, they can each comprise a clock, wherein their clocks are configured for being synchronized with each other, using for instance a GPS signal for synchronizing their clocks. Other known in the art solutions might be used for synchronizing their clocks. This enables the LMS 101 to process, e.g. compare, data having been acquired at the same time by different of said sensors, e.g. the temporal pressure data acquired by one or several NPW sensors and/or the sound sample(s) acquired by one or several ALD sensors.

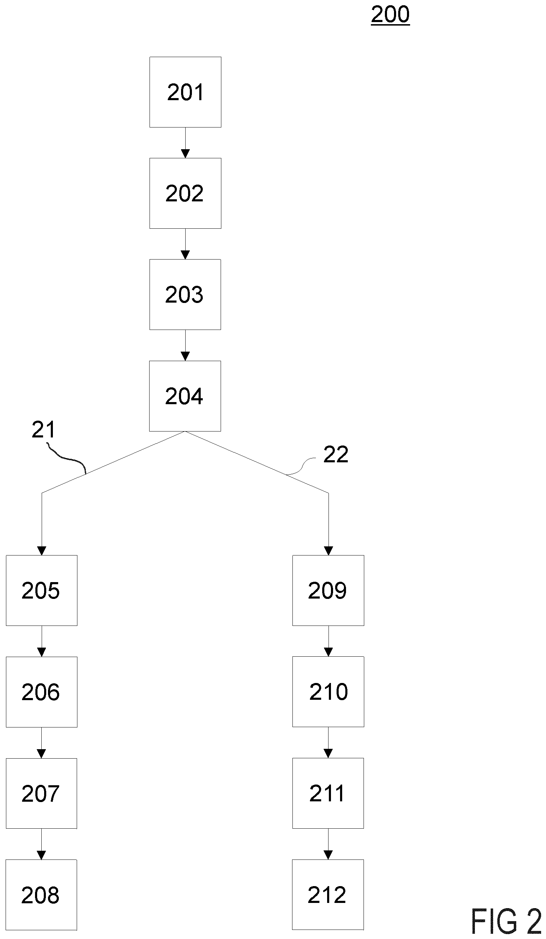

The method 200 used by the system 100 for detecting and locating a leak 11 will be now described in more details with respect to Figure 2 together with Figure 1.

At step 201, the n=6 NPW sensors p_1 , ... , p_6 are configured for operating, preferentially continuously and autonomously, each measuring, preferentially in real time, the pressure in function of the time at a respective position P_s for the NPW sensor p_s, with s =1,...,6, with respect to the fluid containing structure 10, and providing temporal pressure data to the LMS 101.

At step 202, the LMS 101 is configured for acquiring or receiving said temporal pressure data. It is then further configured for detecting a leak 11 in the fluid containing structure from the temporal pressure data received from the NPW sensors p_1 , ... , p_6.

At step 203, the LMS 101 is configured for using one or several acoustic signals measured by one or several of said ALD sensors for improving the detection and/or location of the leak 11 from.

For instance, if a leak 11 is detected 204 from the temporal pressure data, then the LMS 101 is configured for launching, at step 205, a determination of a location 12 of said leak 11 from said temporal pressure data, with respect to the fluid containing structure 10. In other words, the LMS 101 launches a process aiming to determine the location 12 of the leak 11 from the temporal pressure data, said process being called hereafter a "rough localization process", in the sense that the location determined from the temporal pressure data is a "rough location". At the end of this rough localization process carried out by the LMS 101, either a leak location (which is in this case a rough location) has been determined (see First case 21 below), or not (see Second case 22 below). As known in the art, since the wave propagation speed in said fluid can be considered as relatively constant, the arrival time difference of a pressure wave at two NPW sensors can be used to calculate said leak (rough) location 12. Said leak location 12 is usually a rough estimation of the position of the leak 11, that is why it is represented by an ellipse on Figure 1. This results notably from the attenuation of the negative pressure wave, the quality of the temporal pressure data, etc., which prevent a precise determination of the position of the leak with respect to the fluid containing structure 10. Therefore, in order to improve the determination of the leak rough location, the system 100 automatically launches a process, let's call it the "fine localization process" that makes use of the ALD sensors, and this takes place notably at each detection of a leak by the LMS 101 from the temporal pressure data sent by one or several NPW sensors. According to the present invention, this fine localization process takes place after the rough localization process, whatever the result of the latter is, using sound samples acquired by ALD sensors for refining said rough location in order to result in a final "leak position", i.e. a fine or precise determination of the leak position.

Indeed, one can distinguish two different cases after the detection 204 of a leak by the LMS 101 from temporal pressure data:

First case 21: if a leak location 12 (i.e. a rough location) has been determined by the LMS 101 from the temporal pressure data sent by one or several NPW sensors (for this purpose, known in the art techniques might be used, which are typically configured for determining said leak location from signals outputted by NPW sensors that are closest to the leak), then, at step 206, the LMS 101 is configured for sending an activation signal to a subset of ALD sensors. Said subset comprises then only ADL sensors which are located within a predefined distance from said leak location 12. For instance, according to Fig. 1, said activation signal might be sent to the ALD sensors

$$a_1^{4,3} \text{ and } a_2^{4,3}.$$

At step 207, the ALD sensors of said subset, i.e. $a_1^{4,3}$ and $a_2^{4,3}$, are automatically activated upon reception of said activation signal and each automatically starts acquiring a sound sample. At step 208, said sound sample acquired by each of the ALD sensors of the subset is sent to the LMS 101 for analysis purposes. Afterwards, the ALD sensors of said subset preferably each automatically switches to its sleeping mode, either directly after sending the sound sample, or after receiving a deactivation signal from the LMS. At step 209, the LMS uses the received sound samples for improving the precision of said leak location 12, resulting in an improved leak position 13. In particular, in order to improve said leak location 12, the LMS is configured for correlating the data of the received sound sample(s), optionally together with the temporal pressure data of the NPW sensors. Known in the art techniques might be used for determining the leak location from a correlation of the received sound sample data, based for instance on Fourier transform, or by using them as input into an algorithm configured for determining said leak location using known in the art data processing techniques. This enables the LMS to precisely locate the position of the leak with respect to the position of the ALD sensors of said subset.

Second case 22: if no leak (rough) location 12 could be determined by the LMS 101 from said temporal pressure data, then the LMS 101 is configured, at step 210, for sending said activation signal to a predefined subset of ALD sensors. Said predefined subset is chosen by the LMS 101 in function of the position of at least the NPW sensor having temporally first detected or measured a negative wave pressure resulting from the leak 11 - let's call it the first NPW sensor. In particular, if, apart from the first NPW sensor, no other NPW sensor detected/measured said negative wave pressure, then the predefined subset of ALD sensors comprises a part or all ALD sensors comprised between said first NPW sensor and at least one, preferably all, of its directly neighboring NPW sensors. In particular, if apart the first NPW sensor, at least another NPW sensor measured or detected said negative wave pressure, then said predefined subset is chosen by the LMS 101 in function of the position of the two NPW sensors having temporally first detected the negative wave pressure resulting from the leak 11, i.e. the position of said first NPW sensor and the position of another NPW sensor which is the NPW sensor being temporally the second one that detected or measured said negative wave pressure. Said two NPW sensors are for instance the NPW sensors p_3 and p_4 in Figure 1. Indeed, when a negative wave pressure resulting from a leak propagates within the fluid containing structure, it will propagate upstream and downstream, usually reaching first two NPW sensors that are directly neighboring NPW sensors. According to the present invention, the LMS 101 is capable of determining, among the NPW sensors sending temporal pressure data, the two NPW sensors having temporally first detected the negative wave pressure resulting from the leak 11, using then their respective position for choosing said predefined subset.

Preferably, for each couple of directly neighboring NPW sensors, the LMS 101 stores or is configured for automatically determining a predefined subset of ALD sensors to be activated. In other words, for each pair or couple of NPW sensors, or preferably, for at least each couple of directly neighboring NPW sensors, the LMS 101 stores or is configured for determining, according for instance to an algorithm based on a model of the fluid containing structure, a predefined subset of ALD sensors. Preferably, for a given couple of NPW sensors (p_k, p_t), then said predefined subset is the set $S2^{k,t}$, where $k \neq t$. In the particular case of Figure 1, the couple of directly neighboring NPW sensors having first observed the negative pressure wave are the NPW sensors p_3 and P_4, the predefined subset being then $S2^{3,4}$.

At step 211, the ALD sensors of said predefined subset, for instance $a_1^{4,3}$, $a_2^{4,3}$, and $a_3^{4,3}$, are automatically activated upon reception of said activation signal and each automatically starts acquiring a sound sample. At step 212, said sound sample acquired by each of the ALD sensors of the predefined subset is sent to the LMS 101 for analysis purposes. Afterwards, the ALD sensors of said subset preferably each automatically switches to its sleeping mode, either directly after sending the sound sample, or after receiving a deactivation signal from the LMS. At step 213, the LMS uses the received sound samples for determining said improved leak position 13, enabling a precise determination of the leak position even if the temporal pressure data received from the NPW sensors were not sufficient for determining a rough leak location 12. In particular, in order to determine said improved leak position 13, the LMS is configured for correlating the data of the received sound sample(s) of the predefined subset or using them as input in an algorithm configured for determining or estimating said improved leak position 13, notably using known in the art techniques. This enables the LMS to precisely locate the position of the leak with respect to the position of the ALD sensors of said predefined subset. In particular, if the sound samples received by the LMS from the ALD sensors of said predefined subset do still not enable the LMS to determine said improved leak position, because for instance no leak is detected from said sound samples, then the LMS is configured for automatically sending said activation signal to another of said predefined subsets of ALD sensors, repeating said step 211 for said another predefined subset of ALD sensors. Said another predefined subset is notably chosen by the LMS 101 in function of the position of the NPW sensor having temporally first detected said negative pressure wave and a next NPW sensor, preferably a next directly neighboring NPW sensor, which is temporally the third NPW sensor that has detected said negative pressure wave resulting from the leak 11. Preferably, as long as said improved leak position has not been determined, then the above-mentioned process continues for each temporally next NPW sensor having detected said negative pressure wave, activating for each couple of NPW sensors the corresponding predefined subset of ALD

sensors. Preferably, if, in the above-mentioned iterative process, ALD sensors of a predefined subset of ALD sensors have previously already been activated, i.e. were already part of a previous subset of ALD sensors, then they are not activated a second time, i.e. no additional activation signal is sent to said ALD sensors which have already been activated. As explained above, and in other words, the LMS is configured for launching an iterative process that iteratively selects a predefined subset of ALD sensors and carry out step 211 until said improved leak position is determined, wherein the iterative selection of the predefined subsets of ALD sensors is made in function of the position of the NPW sensor having first detected the negative pressure wave, i.e. said first NPW sensor, and of the NPW sensor that is temporally the next NPW sensors among the NPW sensors, preferentially among the directly neighboring NPW sensors of the first NPW sensors, that has detected said negative pressure wave. Preferably, once step 211 has been performed for each predefined subset of ALD sensors "surrounding" the first NPW sensor, notably for each couple of directly neighboring NPW sensors comprising the first NPW sensor, then the LMS automatically stops its determination of the improved leak position, even if the latter has not been determined.

As explained above, the present invention proposes in particular to temporarily activate only a subset of ALD sensors upon reception of the activation signal, automatically switching them back to a sleeping mode (standby mode) either after the capture and sending to the LMS of a sound sample or after the reception of a deactivation signal, which enables to save power of the whole system. Indeed, according to the present invention, the ALD sensors are in particular free of any activation if no leak is detected by the LMS 101 from temporal pressure data, being thus only activated on-request in case of a detection of a leak by the LMS 101, leading to a minimization of the power consumption of the ALD sensors. Of course, other modes of implementation are possible.

For instance, instead of being only activated on-request in case of a detection of a leak by the LMS 101, at least one group of ALD sensors, in addition of being activated on-request as previously explained, can also be activated according to a predefined schedule, wherein said predefined schedule is configured for defining at which time(s) each of said ALD sensors of said group is activated for acquiring one or several sound samples. Preferably, said group of ALD sensors include all ALD sensors of the system. Alternatively, several groups are defined, each comprising directly neighboring ALD sensors, and each having its own predefined schedule. Preferentially, the predefined schedule of two different groups is different. It might also be possible that a same predefined schedule be attributed to several different groups of ALD sensors. In any case, each ALD sensor of a same group is operated according to the same predefined schedule.

In such a case, the ALD sensors of a group of ALD sensors can be thus operated according to said predefined schedule, acquiring one or several sound samples according to respectively one or several acquisition times defined in the predefined schedule. Typically, the ALD sensors acquire such sound samples during one or several short periods at night. The ALD sensors of said group are then configured for sending to the LMS 101 the sound sample acquired during their respective activation time. Preferentially, the ALD sensor having sent a sound sample to the LMS either automatically switches back to its sleeping mode after the sending of the sound sample, or remains in the activated mode until a deactivation signal is received from the LMS. From the received sound samples resulting from the activation of ALD sensors according to said predefined schedule, the LMS is configured for detecting whether the sound sample exceeds a sound threshold and/or matches a leak pattern (i.e. the LMS typically comprises an algorithm configured for recognizing said leak pattern in the received sound sample, and in the affirmative, then the sound sample "matches" the leak pattern), wherein exceeding said sound threshold and/or matching said leak pattern is considered as a detection of a leak. For detecting the leak from a received sound sample, the LMS may implement known in the art sound processing and/or pattern recognition techniques that enable to detect a leak sound in a noisy environment. The LMS is then further configured for correlating at least two sound samples of neighboring ALD sensors, or for using them as input into an algorithm, wherein at least one of said neighboring sensors captured a sound sample exceeding said sound threshold and/or matching said leak pattern, said correlation or algorithm being configured for precisely determining the position of said leak. By "neighboring ALD sensors" it has to be understood a set of ALD sensors installed consecutively one after another, notably along a predefined length of the fluid containing structure, wherein at least one of said neighboring ALD sensors acquired a sound sample exceeding the sound threshold and/or matching said leak pattern. In particular, said predefined length of fluid containing structure might be used as parameter for determining whether an ALD sensor belongs or not to the set. In particular, the set of neighboring ALD sensors might be defined according to a predefined length separating the two most distant ALD sensors from said at least one ALD sensor having acquired a sound sample exceeding the sound threshold and/or matching said leak pattern. Preferentially, the LMS is configured for automatically determining said set of neighboring sensors in function of parameters, such as said predefined length, stored in a memory of the LMS. Preferentially, methods based on the propagation speed of the sound in the fluid contained in said fluid containing structure are used by the LMS for locating the leak from received sound samples. Notably, said leak position might be determined from a time difference between the time needed for a leak sound to propagate, from said leak position, upward towards a first ALD sensor among said neighboring ALD sensors, and the time needed for said leak sound to propagate from said leak position downward towards a second ALD sensor among said same neighboring ALD sensors. In particular, after said determination of the leak position, a deactivation signal is sent to the ALD sensors of the group of ALD sensors activated according to said predefined schedule if said ALD sensors remained in the activated mode after the sending of the sound sample.

According to another preferred embodiment, each ALD sensor of said group is configured for sending to the LMS 101 a sound sample acquired during its activation time only if a sound threshold predefined within the ALD sensor (e.g. in a memory of the ALD sensor) is exceeded by the acquired sound sample and/or the latter matches a leak pattern stored in said memory and/or a processing of said acquired sound sample by a leak recognition algorithm resulted in an identification of a leak. In other words, each ALD sensor is configured for determining whether its sound threshold is exceeded and/or its leak pattern is matched by the captured sound sample and/or a leak is identified by said leak recognition algorithm, and only in the affirmative, it then sends said sound sample to the LMS (i.e. otherwise no sound sample is sent). Indeed, and preferentially, if the acquired sound sample does not exceed the sound threshold and/or does not match the leak pattern and/or no leak is identified within said sound sample, then the ALD sensor does not send any sound sample to the LMS and automatically switches back to its sleeping mode. Preferentially, the ALD sensor having sent a sound sample to the LMS either automatically switches back to its sleeping mode after the sending of the sound sample, or remains in the activated mode until a deactivation signal is received from the LMS. Upon reception of a sound sample having exceeded an ALD sensor sound threshold and/or matched an ALD sensor leak pattern and/or for which a leak has been identified using said leak recognition algorithm, and preferentially for each sound sample received from an ALD sensor for which its sound threshold was exceeded and/or its leak pattern was matched and/or a leak was identified, the LMS determines if one or several ALD sensors neighboring the ALD sensor having sent the sound sample (let's call said *ALD sensor having sent the sound sample* the "first ALD sensor") also sent a respective sound sample. In other words, the LMS is configured for checking whether other ALD sensors within the set of neighboring ALD sensors to which the first ALD sensor belongs to have also sent a sound sample. In the affirmative, then the LMS automatically correlates the "respective" sound sample(s) of said one or several neighboring ALD sensors with the sound sample of the first ALD sensor for determining the position of the leak, or use them as inputs in an algorithm configured for determining said leak location. In other words, it might correlate the sound samples of the ALD sensors belonging to the same set of neighboring ALD sensors as the first ALD sensors or use them as input to said algorithm in order to determine the leak position. In particular, if no ALD sensor neighboring the first ALD sensor also sent a sound sample (i.e. if the first ALD sensor is the single ALD sensor of the set of neighboring sensors that has sent a sound sample - which would mean that the sound threshold of the other neighboring ALD sensors has not been exceeded and/or the leak pattern of said other neighboring ALD sensors was not matched, reason why they did not send a sound sample), or if not all ALD sensors neighboring the first ALD sensor sent their respective sound sample (i.e. if only a part of the ALD sensors of the set of neighboring ALD sensors sent a sound sample), then the LMS is configured for automatically sending said activation signal to each of the neighboring ALD sensor which did not send a sound sample. As explained earlier, said activation signal is configured for triggering an activation of the ALD sensor, the latter capturing and sending then a sound sample to the LMS in response to the reception of the activation signal. At the end, the LMS is configured for correlating at least two sound samples of the neighboring ALD sensors of the set of neighboring ALD sensors to which the first ALD sensor belongs to or for using them as input into an algorithm, said correlation/algorithm being configured for precisely determining the position of said leak. Finally, after said determination of the leak position, the LMS is preferentially configured for sending a deactivation signal, for instance to each ALD sensor of said set of neighboring ALD sensors that has been activated or which remains activated, or to any other ALD sensor which remained in the activated mode after sending its sound sample.

To conclude, the present invention proposes a system and method for improving the detection and location of a leak. Indeed, contrary to method based on acoustic leak detection only, wherein acoustic sensors can only operate during short period of time according to planned schedule for power consumption reasons, which has the disadvantage of potentially missing the detection of a start of a leakage, the use of NPW sensors together with ALD sensors makes it possible to always detect at an early stage a leakage start thanks to the continuous operating mode of the NPW sensors. The system according to the invention may react thus more quickly to a leak, detecting and identifying the location of the leak more efficiently than conventional methods. Additionally, the use of the NPW sensors together with ALD sensors makes it possible to more precisely determine the position of any leak that has been observed by the NPW sensors. While the present description focused on an implementation wherein the leak detection is determined by the LMS from the pressure values measured by the NPW sensors, and the improved leak position is determined by the LMS either (i) from a leak location obtained from said measured pressure values and improved through the use of the acoustic signal of one or several ALD sensors to result into said improved leak position, or (ii) only from the acoustic signal of several ALD sensors in order to directly (i.e. in this case, no leak location 12 has been determined by the LMS, for instance because of bad quality data) calculate said improved leak position 13, the present invention contemplates also embodiments wherein the acoustic signal of one or respectively several sensors is, respectively are, used together with said measured pressure value, i.e. said temporal pressure data, for improving the detection of a leak, by correlating for instance the acoustic signal and said temporal pressure data occurring at a same time for leak detection purpose.

**Claims**

1. System (100) for detecting and locating a leak (11) in a fluid containing structure (10), said system (100) comprising:

   - a set S1 of n pressure transducers (called hereafter "NPW sensors") p_1 , ... , p_n, with n ≥ 2, wherein each NPW sensor p_i, with i = 1,...,n, is configured for being installed at a position P_i with respect to the fluid containing structure (10), and wherein each NPW sensor p_i is configured for measuring, at said position P_i, the pressure of the fluid contained in said fluid containing structure (10) and for outputting measured pressure values in function of the time;
   - a leak monitoring system (hereafter "LMS") (101) configured for acquiring or receiving said measured pressure values, the LMS (101) being further configured for detecting and locating a leak (11) in the fluid containing structure (10);

   the system according to the invention being **characterized in that**:

   - it comprises one or several acoustic sensors (called hereafter "ALD sensors") connected to the LMS (101) and used by the latter for improving a detection and/or a location of the leak (11) from acoustic signals captured by one or several of said ALD sensors.

2. System (100) according to claim 1, comprising, between at least one couple of directly neighboring NPW sensors p_k and p_t, a set $S2^{k,t}$ of $m^{k,t}$ ALD sensors $a_1^{k,t} , ... , a_{m^{k,t}}^{k,t}$ , with $m^{k,t} \geq 1$, wherein each ALD sensor $a_v^{k,t}$ , with v = 1 , ... , $m^{k,t}$, is configured for being installed at a position $A_v^{k,t}$ for capturing said acoustic signal.

3. System (100) according to claim 1 or 2, wherein each of the ALD sensors is configured for operating on demand, upon reception of an activation signal sent by the LMS (101) in case of the detection, by the latter, of a leak (11) from said measured pressure values.

4. System (100) according to claim 3, wherein the reception of the activation signal by an ALD sensor is configured for triggering an automatic activation of the latter, which automatically switches from a nominal sleeping mode to an activated mode in which the ALD sensor is configured for capturing a sound sample and for sending the captured sound sample to the LMS (101).

5. System (100) according to claim 3 or 4, wherein the LMS is configured for sending said activation signal to a subset of ALD sensors upon detection, from said measured pressure values, of a leak (11) in the fluid containing structure (10).

6. System (100) according to claim 5, wherein if a leak location (12) has been determined by the LMS (101) from said measured pressure values, then said subset comprises ALD sensors comprised within a predefined distance from said leak location (12).

7. System (100) according to claim 5, wherein if no leak location (12) has been determined by the LMS (101) from said measured pressure values, then said subset is predefined in function of the position, with respect to the fluid containing structure (10), of the two NPW sensors having temporally first measured a negative wave pressure resulting from said leak (11).

8. Method (200) for detecting and locating a leak (11) in a fluid containing structure (10), the method comprising:

    - operating (201) NPW sensors of a set S1 of n NPW sensors p_1 , ... , p_n, with n ≥ 2, wherein each NPW sensor p_i, with i = 1,...,n, is configured for being installed at a position P_i with respect to the fluid containing structure (10), wherein, during operation, each NPW sensor p_i is configured for measuring, at said position P_i, the pressure of the fluid contained in said fluid containing structure (10) and for outputting measured pressure values in function of the time;
    - acquiring or receiving (202), by a LMS (101), said measured pressure values, wherein the LMS (101) is configured for detecting and locating a leak (11) in the fluid containing structure (10);

    the method being further **characterized in that** it comprises:

    - using (203) acoustic signals measured by one or several ALD sensors connected to the LMS (101) for improving a detection and/or a location of the leak (11) by said LMS (101).

9. Method (200) according to claim 8, comprising operating each of the ALD sensors on demand, upon reception of an activation signal sent by the LMS (101) in case of the detection (204), by the latter, of a leak (11) from said measured pressure values.

10. Method (200) according to claim 8 or 9, comprising detecting (204) a leak (11) from the measured pressure values and launching (205) a determination of a location (12) of said leak (11) from said measured pressure values with respect to the fluid containing structure (10).

11. Method (200) according to claim 10, comprising, if a leak location (12) has been determined by the LMS (101) sending (206) an activation signal to a subset of ALD sensors located within a predefined distance from said leak location (12).

12. Method (200) according to claim 10, comprising automatically activating (207) the ALD sensors of said subset upon reception of said activation signal and automatically starting an acquisition of a sound sample by each of them.

13. Method (200) according to claim 12, comprising sending (208) each acquired sound sample to the LMS (101), which uses the received sound sample(s) for determining an improved leak position (13).

14. Method (200) according to claim 10, comprising, if no leak location (12) could be determined by the LMS (101) from said measured pressure values, then sending (210), by the LMS, an activation signal to a subset of ALD sensors predefined in function of the position of the two NPW sensors having first detected a negative wave pressure resulting from the leak (11).

15. Method (200) according to claim 14, comprising automatically activating (211) the ALD sensors of said subset upon reception of said activation signal, and automatically starting, by each of them, an acquisition of a sound sample, the method further comprising sending (212) to the LMS (101) the acquired sound sample(s), and using (213), by the LMS (101), the received sound sample(s) for determining an improved leak position (13).

100

101

$P\_1$

$p\_1$

10

$P\_2$

$p\_2$

$A_1^{2,3}$

$a_1^{2,3}$

$A_2^{2,3}$

$a_2^{2,3}$

$P\_3$

$a_2^{5,3}$ $a_1^{5,3}$

$p\_3$

$a_3^{5,3}$

$a_1^{4,3}$

13

11

$A_1^{5,6}$

$p\_5$

$P\_5$

$a_1^{5,6}$

$a_2^{4,3}$

12

$a_2^{5,6}$

$a_3^{4,3}$

$A_2^{5,6}$

$p\_6$

$P\_6$

$P\_4$

$p\_4$

FIG 1

200

FIG 2

Europäisches Patentamt

European Patent Office

Office européen des brevets

# EUROPEAN SEARCH REPORT

**Application Number**

EP 23 16 8965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/276116 A1 (SADOVNYCHIY SERGIY [MX] ET AL) 1 September 2022 (2022-09-01)<br>* paragraph [0002]; figures 1-3 *<br>* paragraph [0044] – paragraph [0060] *<br>----- | 1-15 | INV.<br>G01M3/24<br>G01M3/28<br>G06Q50/06<br>E03B7/00<br>F17D5/06 |
| X | CN 108 488 638 A (UNIV NORTHEASTERN) 4 September 2018 (2018-09-04)<br>* paragraph [0002]; figure 1 *<br>* paragraph [0005] – paragraph [0010] *<br>* paragraph [0126] – paragraph [0162] *<br>----- | 1-15 | |
| X | US 2022/136924 A1 (SINHARAY ARIJIT [IN] ET AL) 5 May 2022 (2022-05-05)<br>* paragraph [0002]; figures 1,2,4,5 *<br>* paragraph [0006] – paragraph [0007] *<br>----- | 1-15 | |
| X | US 2011/093220 A1 (YANG BAO-WEN [US] ET AL) 21 April 2011 (2011-04-21)<br>* paragraph [0005]; figure 1 *<br>* paragraph [0035] *<br>* paragraph [0050] – paragraph [0063] *<br>----- | 1-15 | |
| A | US 2019/154538 A1 (SOLOMON DAVID [IL]) 23 May 2019 (2019-05-23)<br>* paragraph [0002] – paragraph [0008]; figures 1,2,6 *<br>* paragraph [0013] – paragraph [0014] *<br>* paragraph [0024] – paragraph [0028] *<br>* paragraph [0041] – paragraph [0044] *<br>----- | 1-15 | TECHNICAL FIELDS SEARCHED (IPC)<br><br>G01M<br>G06Q<br>E03B<br>F17D |
| A | US 2020/326257 A1 (SZURLEY JOSEPH [US] ET AL) 15 October 2020 (2020-10-15)<br>* paragraph [0002]; figures 7,8 *<br>* paragraph [0011] – paragraph [0020] *<br>* paragraph [0068] – paragraph [0071] *<br>----- | 1-15 | |

The present search report has been drawn up for all claims

| Place of search | Date of completion of the search | Examiner |
|---|---|---|
| The Hague | 22 September 2023 | Foster, Keir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8965

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | | Publication date | Patent family member(s) | | Publication date |
|---|---|---|---|---|---|
| US 2022276116 | A1 | 01-09-2022 | CA | 3149984 A1 | 26-08-2022 |
| | | | US | 2022276116 A1 | 01-09-2022 |
| CN 108488638 | A | 04-09-2018 | NONE | | |
| US 2022136924 | A1 | 05-05-2022 | EP | 3992600 A1 | 04-05-2022 |
| | | | US | 2022136924 A1 | 05-05-2022 |
| US 2011093220 | A1 | 21-04-2011 | US | 2011093220 A1 | 21-04-2011 |
| | | | WO | 2011130366 A2 | 20-10-2011 |
| US 2019154538 | A1 | 23-05-2019 | CN | 109073496 A | 21-12-2018 |
| | | | GB | 2564604 A | 16-01-2019 |
| | | | US | 2019154538 A1 | 23-05-2019 |
| | | | WO | 2017175136 A1 | 12-10-2017 |
| US 2020326257 | A1 | 15-10-2020 | CN | 111727360 A | 29-09-2020 |
| | | | DE | 112018006024 T5 | 17-09-2020 |
| | | | US | 2020326257 A1 | 15-10-2020 |
| | | | WO | 2019129510 A1 | 04-07-2019 |

EPO FORM P0459

For more details about this annex : see Official Journal of the European Patent Office, No. 12/82